# EUROPÄISCHE PATENTSCHRIFT

(11) **EP 2 652 382 B1**
(45) Veröffentlichungstag und Bekanntmachung des Hinweises auf die Patenterteilung: **08.10.2014**
(21) Anmeldenummer: 11784449.8
(22) Anmeldetag: 02.11.2011
(51) Int. Cl.: F24H 1/00, F16L 53/00, F16L 25/01

(54) **BEHEIZBARE ANSCHLUSSVORRICHTUNG FÜR MEDIENFÜHRENDE, ELEKTRISCH BEHEIZBARE SCHLÄUCHE**
HEATABLE CONNECTION APPARATUS FOR MEDIA-CONDUCTING, ELECTRICALLY HEATABLE HOSES
DISPOSITIF DE RACCORDEMENT POUVANT ÊTRE CHAUFFÉ POUR TUYAUX CONDUISANT DES FLUIDES POUVANT ÊTRE CHAUFFÉS ÉLECTRIQUEMENT

(30) Priorität: 15.12.2010 DE 102010061271
(43) Veröffentlichungstag der Anmeldung: 23.10.2013
(73) Patentinhaber: ContiTech Schlauch GmbH, 30165 Hannover (DE)
(72) Erfinder: DUDE, Holger, 34516 Vöhl-Obernburg (DE); FUCHS, Thomas, 34477 Twistetal (DE)
(74) Vertreter: Preusser, Andrea
(86) Internationale Anmeldenummer: PCT/EP2011/069214
(87) Internationale Veröffentlichungsnummer: WO 2012/079833

(56) Entgegenhaltungen:
- EP-A1- 1 513 227
- DE-U1- 9 004 789
- US-A- 2 479 483

## Beschreibung

Die Erfindung betrifft eine beheizbare Anschlussanordnung für medienführende, elektrisch beheizbare Schläuche, wobei die Anschlussanordnung ein Verzweigungsstück aufweist, das zwei Anschlussstutzen für jeweils ein Schlauchende aufweist, und das einen weiteren mit dem Leitungsinneren kommunizierenden Anschluss aufweist, wobei jeder Schlauch mit zwei in dem jeweiligen Schlauch mindestens über einen Teilbereich der Schlauchlänge eingebetteten elektrischen Heizleiter versehen ist, deren Enden aus dem Schlauch zum Verbinden mit einem elektrischen Bauteil herausgeführt sind.

Elektrisch beheizbare Schläuche für den Einsatz in Kraftfahrzeugen sind vielfältig bekannt. Das in diesen Schläuchen zwischen zwei Anschlussstellen fließende Medium wird von diesen Schläuchen beheizt.

Die DE 90 04 789 U1 betrifft einen Schlauchverbinder mit einem Zu- und einem Ablaufstutzen für einen Hauptstrom und einen Abzweigstutzen für einen abzweigenden Strom. Der Zu- und Ablaufstutzen sind koaxial zueinander und der Abzweigstutzen unter einem spitzen Winkel hierzu angeordnet.

Ein beheizbarer Schlauch mit wenigstens einem zur Erwärmung eines im Schlauch fließenden Mediums dienenden elektrischen Heizleiter ist beispielsweise aus der DE 102 01 920 A1 bekannt, wobei sich der Heizleiter über zumindest einen Teilbereich der Schlauchlänge erstreckt und aus einer metallischen Seele und einer Ummantelung besteht. Der Heizleiter ist üblicherweise in einer Schicht des Schlauches eingebettet. Bei einem mehrschichtigen Schlauch kann der Heizleiter auch zwischen zwei Schichten angeordnet sein. Die Enden des Heizleiters sind freigelegt, um sie an eine zum Betreiben des Heizleiters erforderliche Spannungsquelle anschließen zu können. Üblicherweise sind die freigelegten Enden des Heizleiters an einem Ende des Schlauches angeordnet. Es ist aber auch möglich, dass jeweils ein freigelegtes Ende des Heizleiters an einem Ende des Schlauches angeordnet ist.

Die freigelegten Enden des Heizleiters werden mit einem elektrischem Anschluss (Stecker) versehen und dann an eine Spannungsquelle angeschlossen. Da die Spannungsquelle üblicherweise nicht direkt am Schlauch angeordnet ist, müssen die freigelegten Enden des Heizleiters eine vorgegebene Länge aufweisen, um sie über den Stecker an die Spannungsquelle anschließen zu können.

Die beheizbare Schlauchleitung weist vorzugsweise zwei gewendelte Heizleiter auf, die an dem einen Ende bestromt und an dem anderen Ende kurz geschlossen werden. Hierdurch wird das Aufheizen der Leitung gewährleistet.

Aus der EP 1 329 660 B1 ist ein flexibler mehrschichtiger beheizbarer Schlauch mit wenigstens einer Verstärkungsschicht und einer elastomeren Außenschicht sowie einem zur Erwärmung eines im Schlauch fließenden Mediums dienenden elektrischen Heizleiters bekannt. Der Heizleiter erstreckt sich über zumindest einen Teilbereich der Schlauchlänge und besteht aus einer metallischen Seele und einer Ummantelung, wobei der Heizleiter außerhalb der äußeren Lage der Verstärkungsschicht aber unter oder innerhalb der elastomeren Außenschicht eingebettet ist. Um eine einfache und sichere elektrische Kontaktierung des Heizleiters mit einer Spannungsquelle möglich zu machen, weist die elastomere Außenschicht eine geringere Festigkeit als der Heizleiter auf, die so bemessen ist, dass der Heizleiter durch eine radial nach außen einwirkende Kraft unter Durchtrennen der ursprünglichen oder geschwächten elastomeren Außenschicht aber ohne Schädigung seiner metallischen Seele und seiner Ummantelung freilegbar und unmittelbar mit einem elektrischen Anschluss verbindbar ist. Der Heizleiter verläuft vorzugsweise zumindest in einem Teilbereich der Schlauchlänge wendelförmig unter oder innerhalb der elastomeren Außenschicht.

Die beschriebene Technik der beheizbaren Schläuche hat sich bei dem Transport von flüssigen Medien zwischen zwei Anschlussstellen bzw. Anschlussstutzen von Kfz-Aggregaten wie z.B. Vorratstank, Einspritzeinheit, Pumpe etc., bewährt. In besonderen Einsatzfällen hat es sich aber gezeigt, dass das flüssige Medium in den Schlauchanschlussstutzen der Verbindungsblöcke, die üblicherweise als standardisierte Steckverbinder, insbesondere Schnellsteckverbinder, ausgebildet sind und an den Schlauchenden angeordnet sind, einfrieren kann.

Diese Einfriergefahr ist insbesondere bei Abgasnachbehandlungssystemen zur Verminderung von Stickoxidemissionen einer Brennkraftmaschine der Fall. Dabei wird mit Hilfe der Selectiv-Catalytic-Reduktions-Technologie (SCR) Stickoxid in Luftstickstoff und Wasserdampf umgewandelt. Als Reduktionsmittel wird wässerige Harnstofflösung verwandt, die in einem separaten Vorratsbehälter im Kraftfahrzeug mitgeführt wird. Die wässrige Harnstofflösung wird aus dem Vorratsbehälter über ein Fördermodul bzw. eine Pumpe herausgefördert und einem Dosiermodul zugeführt, von dem die Harnstofflösung dosiert in den Abgasstrom vor dem Katalysator eingespritzt wird. Überschüssiges Reduktionsmittel wird von dem Fördermodul über einen Rücklauf zurück in den Vorratsbehälter geleitet.

Zwischen dem Vorratsbehälter, dem Fördermodul und dem Dosiermodul sind Schlauchleitungen zur Förderung des Reduktionsmittels vorhanden. Diese Schlauchleitungen müssen mit den genannten Aggregaten zur Herstellung der Fluidverbindung verbunden werden.

Für die Schlauchanschlüsse an die Aggregate sind die im Automobilbau standardisierten Schnellsteckverbinder an den Schlauchenden einsetzbar, deren Aufnahmeteil an den Aggregaten bauseitig angebracht sind. Die Schnellsteckverbinder (Quick Connectoren) haben den Vorteil einer schnellen Schlauchmontage und sind in vielfältigen Ausführungsformen bekannt. Am häufigsten sind sie an den Aggregaten als "Vaterteil" ausgebildet und an den Schlauchenden als "Mutterteil", das einen Anschlussstutzen für das Schlauchende aufweist, auf den das Ende des zu verbindenden Schlauchs mediendicht aufgeschoben und befestigt wird.

Die Schlauchleitungen zwischen Vorratsbehälter und der Abgasleitung müssen beheizbar sein, da die Gefahr des Einfrierens der wässrigen Harnstofflösung ab minus 11°C besteht. Es ist bekannt, die Gefahr des Einfrierens durch den Einsatz der bekannten elektrisch beheizbaren Schläuche abzuwenden. Obwohl diese elektrisch beheizbaren Schläuche sich bewährt haben, sind in extremen Anwendungsfällen die Steckverbinder die Schwachstelle der Abgasbehandlungssysteme hinsichtlich der Einfriergefahr. Die Einfriergefahr in den Steckverbindungen selbst bleibt bestehen.

Um eine Vorrichtung zu schaffen, die einen Einfrierschutz der wässrigen Harnstofflösung auch in den Anschlüssen der Schlauchleitungen an den zu verbindenden Aggregaten ermöglicht, wurde bereits vorgeschlagen. für die Schlauchanschlüsse kühlwasserbeheizbare Verbindungsblöcke zu verwenden, welche derart ausgebildet sind, dass das temperierbare Kühlwasser durch sie durchgespült wird. Dadurch können nicht nur die Schläuche, sondern auch die Steckverbinder aufgetaut werden.

Auch der Einsatz von speziellen Schnellsteckverbindern (Quick-Connectoren), die ein separates elektrisches Heizelement (z. B. beheizbares Keramik-Bauteil) aufweisen, ist bekannt. Nachteilig ist, dass dieses eine sehr teure und aufwendige Lösung ist, die außerdem einen zusätzlichen Elektroanschluss (Stecker) braucht.

Um die Konzentration des Harnstoffs in der Lösung während des Einpritzprozesses zu messen, wird ein Sensor über ein Verzweigungsstück (T-Stück, Y-Stück) in die Rohr- bzw. Schlauchleitung eingesetzt, wobei die Schlauchleitung aufgetrennt werden muss. Auch der Bereich des Verzweigungsstücks unterliegt der Einfriergefahr. Dieser Bereich der Schlauchleitung sollte somit auch elektrisch beheizt werden. Für diese Verzeigungsstücke sind derzeit aber keine beheizbaren Ausbildungen bekannt, weil zwei Schlauchenden in einer Trennstelle aufeinandertreffen.

Der Erfindung liegt die Aufgabe zugrunde, eine Anschlussanordnung der eingangs beschriebenen Art zu schaffen, durch die der gesamte Leitungszweig, also Schlauch und die Anschlussstellen von Schlauch und der zu verbindenden Aggregate, mit einer durchgehenden direkten Beheizbarkeit ausgestattet ist und die sich durch eine kostengünstige Lösung mit geringem technischen Aufwand auszeichnet.

Die Aufgabe wird erfindungsgemäß durch die Merkmale im Kennzeichen des Anspruchs 1 gelöst.

Im Bereich des Verzweigungsstücks sind die zwei Heizleiter aus jedem Schlauchleitungsende gelöst und jeder der beiden Heizleiter ist mit dem jeweiligen anderen Heizleiter des anderen Schlauchendes vercrimpt, so dass ein elektrischer Durchgang vorhanden ist und der Strom fließen kann. Es liegen somit zwei vercrimpte Heizleiterpaare vor, auf jeder Gehäuseseite eines.

Jedes Heizleiterpaar ist zusammengedrückt nach unten gebogen und mit der Crimpstelle zuerst von oben unter einem seitlichen Brückensteg des Gehäuses des Verzweigungstücks hindurch nach unten Richtung Gehäuseboden geführt, von wo es um 90° umgelenkt und im engen Gehäusekontakt um den Boden des Verzweigungsstücks gelegt ist. Auf der jeweils gegenüberliegenden Seite ist jedes Heizleiterpaar wieder nach oben geführt und mit der eigenen Crimpstelle zuerst von unten durch den eine Art Riegel bildenden Brückensteg des Gehäuses gesteckt und somit in dieser Lage positioniert ist.

Jedes vercrimpte Heizleiterpaar ist also nach unten gebogen und um 90° um den Boden des Verzweigungsstücks umgelenkt und auf der Gegenseite wieder nach oben geführt. Mit dieser das Verzweigungsstück umfassenden Anordnung wird gewährleistet, dass genug elektrische Heizleistung zur Verfügung steht, damit die wässrige Harnstofflösung im Bereich des Verzweigungsstücks nicht einfriert bzw. im Einfrierfall die wässrige Lösung dort aufgetaut werden kann.

In vorteilhafter Ausgestaltung der Erfindung sind die beiden Brückenstege außen am Gehäuse gegenüberliegend angeordnet und überbrücken jeweils einen achsialen Kanal, die in die Oberfläche des zylindrischen Gehäuses des Verzweigungsstücks eingearbeitet sind. In den Kanälen oder Nuten sind die vercrimpten Heizleiter eingelegt und somit geführt.

In weiterer vorteilhafter Ausgestaltung der Erfindung sind in den Kanälen die Heizleiterpaare einmal von oben und einmal von unten vom Gehäuseboden kommend eingelegt und geführt.

In weiterer vorteilhafter Ausgestaltung der Erfindung ist das mit den Heizleiterpaaren konfektionierte Verzweigungsstück mit einem Kunststoffwerkstoff umgossen. Dadurch wird der Aufbau vor äußeren Einflüssen geschützt.

In weiterer vorteilhafter Ausgestaltung der Erfindung besteht die Vergussschicht des Kunststoffwerkstoffs aus Polyurethan oder Polyamid.

Durch das so beheizbare Verzweigungsstück ist der gesamte Leitungszweig der Harnstofflösung von dem Vorratsbehälter bis zur Abgasleitung mit einer durchgehenden direkten Beheizbarkeit ausgestattet. Eine Kältebrücke innerhalb des Leitungszweiges ist nicht mehr vorhanden. Ein Einfrieren des Verzweigungsstückes ist nicht mehr möglich. Zur Beheizung des Verzweigungsstückes werden die bereits vorhandenen Heizleiter aus der vorhandenen Schlauchleitung verwendet. Ein zusätzlicher elektrischer Anschluss zur Beheizung des Verzweigungsstückes ist nicht mehr notwendig.

Anhand der Zeichnung wird nachstehend ein Ausführungsbeispiel der Erfindung näher erläutert. Es zeigt
- Fig. 1: ein in eine Schlauchleitung eingesetztes Verzweigungsstück, das zwei Anschlussstutzen zur festen Aufnahme des jeweiligen Endbereichs zweier elektrisch beheizbarer Schläuche aufweist;
- Fig. 2: eine Seitenansicht des Verzweigungsstücks mit zwei achsial am Gehäuse des Verzweigungsstücks verlaufenden Heizleiterpaaren;.
- Fig. 3: eine gekippte perspektivische Seitenansicht des Verzweigungsstücks;
- Fig. 4: eine Bodenansicht des Verzweigungsstücks mit zwei angelegten Heizleiterpaaren;
- Fig. 5: das mit Polyurethan (PUR) oder Poyamid (PA) umgossene Verzweigungsstück.

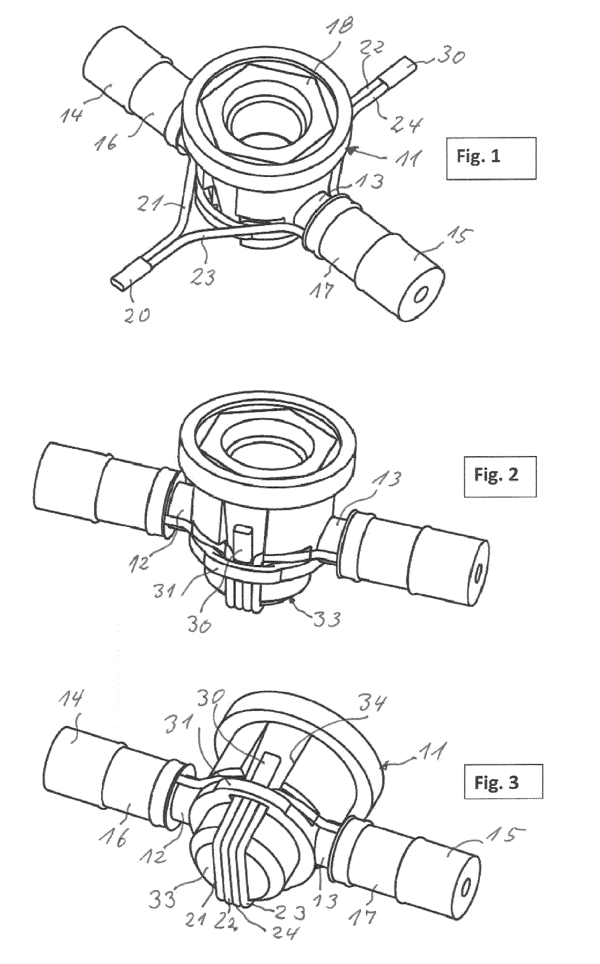

Das in den Fig.1 bis 4 gezeigte Verzweigungs stück 11 weist zwei diametral gegenüberliegende Anschlussstutzen 12 und 13 auf, auf die jeweils das Ende eines elektrisch beheizbaren Schlauches 14 bzw. 15 aufgeschoben ist. Jedes Schlauchende 14 bzw. 15 ist über eine Presshülse 16 bzw. 17 auf dem jeweiligen Schlauchanschlussstutzen 12 bzw. 13 festgesetzt.

Das Verzweigungsstück 11 weist einen Innengewindeanschluss 18 für den nicht gezeigten Sensor auf, der als Gegenstück einen Außengewindeanschluss bereits bauseitig angebracht aufweist und durch einfaches Verschrauben montiert wird.

Die nur mit ihrem jeweiligen kurzen Endabschnitt gezeigten beiden Schläuche 14 bzw. 15 werden von jeweils zwei gewendelten Heizleitern 21, 22 bzw. 23, 24, auch oft Heizlitzen genannt, erwärmt, die in den jeweiligen Schlauchaufbau integriert sind. Zum Anschließen der Heizleiter 21, 22 des einen Schlauchendes 14 mit den Heizleitern 23, 24 des anderen Schlauchendes 15 sind am Ende jedes Schlauchendes 14 bzw. 15 die einzelnen Heizleiter 21, 22 bzw. 23, 24 freigelegt.

Das freie abisolierte Ende des Heizleiters 21 des einen Schlauchendes 14 wird mit dem freien abisolierten Ende des Heizleiters 23 des anderen Schlauchendes 15 mittels einer metallischen Hülse 20 vercrimpt. Dieses vercrimpte Heizleiterpaar 21, 23 liegt auf der einen Umfangsseite des Verzweigungstücks 11. Der Heizleiter 22 des einen Schlauchendes 14 wird mit dem Heizleiter 24 des anderen Schlauchendes 15 mittels einer weiteren metallischen Hülse 30 ebenfalls vercrimpt. Dieses vercrimpte Heizleiterpaar 22, 24 liegt auf der anderen Umfangsseite des Verzweigungstücks 11.

Jedes vercrimpte Heizleiterpaar 21, 23 bzw. 22, 24 wird zusammengedrückt nach unten gebogen und mit der Crimpstelle 20 bzw. 30 zuerst von oben unter einem seitlichen Brückensteg 31 bzw. 32 des Gehäuses 11 durch nach unten Richtung Gehäuseboden 33 geführt. Dort wird es um 90° umgelenkt und im engen Gehäusekontakt um den Boden 33 des Verzweigungsstücks 11 gelegt. Jedes gecrimpte Heizleiterpaar 21, 23 bzw. 22, 24 wird dann auf der jeweils gegenüberliegenden Seite wieder nach oben geführt und mit der Crimpstelle 20 bzw. 30 zuerst von unten durch den eine Art Riegel bildenden Brückensteg 31 bzw. 32 des Gehäuses 11 gesteckt und somit in dieser Lage positioniert.

Die beiden Brückenstege 31 bzw. 32 sind gegenüberliegend angeordnet und überbrücken jeweils einen achsialen Kanal 34 bzw. 35, die in die Oberfläche des zylindrischen Gehäuses des Verzweigungsstücks 11 eingearbeitet sind. In diesen Kanälen 34 bzw. 35 sind die Heizleiterpaare 21, 23 bzw. 22, 24 einmal von oben und einmal vom Boden 33 kommend eingelegt und somit geführt.

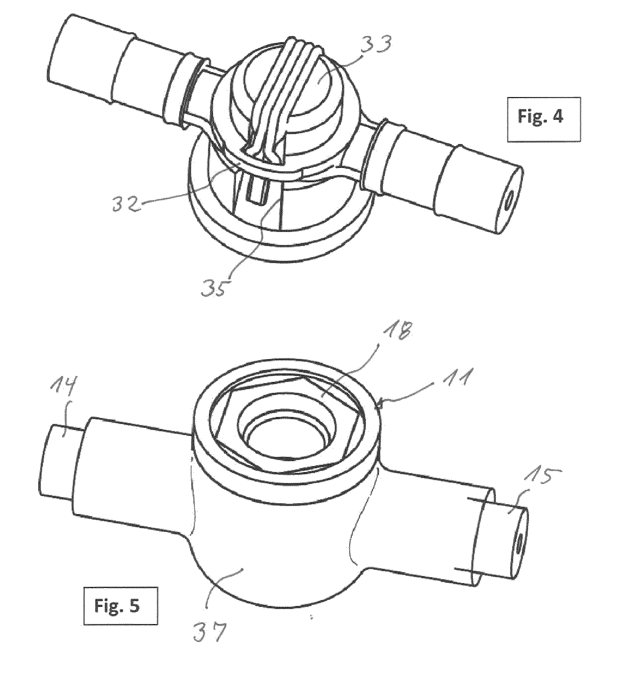

Um diesen konfektionierten Aufbau vor äußeren Einflüssen zu schützen, wird das konfektionierte Verzweigungsstücks 11 dann mit PUR oder PA umgossen (Fig. 5). Die so erzielte Vergussschicht 37 deckt dadurch die Beheizung des Verzweigungsstücks 11 ab. Die Heizleiter 21, 22 bzw. 23, 24 sind isoliert und geschützt.

### Bezugszeichenliste

- 11: Verzeigungsstück; Gehäuse
- 12: Anschlussstutzen
- 13: Anschlussstutzen
- 14: elektrisch beheizbarer Schlauch
- 15: elektrisch beheizbarer Schlauch
- 16: Presshülse
- 17: Presshülse
- 18: Innengewindeanschluss
- 20: Crimphülse
- 21: Heizleiter
- 22: Heizleiter
- 23: Heizleiter
- 24: Heizleiter
- 30: Crimphülse
- 31: Brückensteg; Riegel
- 32: Brückensteg; Riegel
- 33: Gehäuseboden
- 34: Kanal
- 35: Kanal
- 37: Vergussschicht

## Patentansprüche

1. Beheizbare Anschlussanordnung für medienführende, elektrisch beheizbare Schläuche, wobei die Anschlussanordnung ein Verzweigungsstück aufweist, das zwei Anschlussstutzen für jeweils ein Schlauchende aufweist, und das einen weiteren mit dem Leitungsinneren kommunizierenden Anschluss aufweist,
wobei jeder Schlauch mit zwei in dem jeweiligen Schlauch mindestens über einen Teilbereich der Schlauchlänge eingebetteten elektrischen Heizleiter versehen ist, deren Enden aus dem Schlauch zum Verbinden mit einem elektrischen Bauteil herausgeführt sind,
**dadurch gekennzeichnet,**
**dass** die abisolierten Enden der Heizleiter (21, 22) des einen Schlauchendes (14) mit den abisolierten Enden der Heizleiter (23, 24) des anderen Schlauchendes (15) mittels je einer Crimphülse (20 bzw. 30) zu zwei Heizleiterpaaren (21, 23 bzw. 22, 24) verbunden sind, dass die Crimpstellen (20 bzw. 30) der beiden Heizleiterpaare (21, 23 bzw. 22, 24) am Außenumfang des Verzweigungstücks (11) sich diametral gegegenüberliegend angeordnet sind,
**dass** jedes Heizleiterpaar (21, 23 bzw. 22, 24) zusammengedrückt nach unten gebogen und mit der Crimpstelle (20 bzw. 30) zuerst von oben unter einem seitlichen Brückensteg (31 bzw. 32) des Gehäuses (11) hindurch nach unten Richtung Gehäuseboden (33) geführt ist, von wo es um 90° umgelenkt und im engen Gehäusekontakt um den Boden (33) des Verzweigungsstücks (11) gelegt ist,
**dass** der Endbereich des jeweiligen Heizleiterpaares (21, 23 bzw. 22, 24) auf der jeweils gegenüberliegenden Seite wieder nach oben geführt und mit der Crimpstelle (20 bzw. 30) zuerst von unten durch den eine Art Riegel bildenden Brückensteg (31 bzw. 32) des Gehäuses (11) gesteckt und somit in dieser Lage positioniert ist.

2. Anschlussanordnung nach Anspruch 1, **dadurch gekennzeichnet, dass** die beiden Brückenstege (31 bzw. 32) außen am Gehäuse (11) gegenüberliegend angeordnet sind und jeweils einen achsialen Kanal (34 bzw. 35) oder Nut überbrücken, die in die Oberfläche des zylindrischen Gehäuses des Verzweigungsstücks (11) eingearbeitet sind.

3. Anschlussanordnung nach Anspruch 2, **dadurch gekennzeichnet, dass** in den Kanälen (34 bzw. 35) die Heizleiterpaare (21, 23 bzw. 22, 24) einmal von oben und einmal von unten vom Gehäuseboden (33) kommend eingelegt und geführt sind.

4. Anschlussanordnung nach einem der Ansprüche 1 bis 3, **dadurch gekennzeichnet, dass** das mit den Heizleiterpaaren konfektionierte Verzweigungsstücks (11) mit einem Kunststoffwerkstoff umgossen ist.

5. Anschlussanordnung nach Anspruch 4, **dadurch gekennzeichnet, dass** die Vergussschicht (37) aus Polyurethan oder Polyamid besteht.

## Claims

1. Heatable connection arrangement for media-conducting, electrically heatable hoses, wherein the connection arrangement has a junction piece which has two connection nozzles for in each case one hose end, and which has a further connection which communicates with the line interior,
wherein each hose is provided with two electrical heating conductors which are embedded in the respective hose at least over part of the length of the hose, the ends of said heating conductors being routed out of the hose in order to form a connection with an electrical component,
**characterized**
**in that** the stripped ends of the heating conductors (21, 22) of one hose end (14) are connected to the stripped ends of the heating conductors (23, 24) of the other hose end (15) by means of in each case one crimp sleeve (20 and, respectively, 30) to form two heating conductor pairs (21, 23 and, respectively, 22, 24),
**in that** the crimp points (20 and, respectively, 30) of the two heating conductor pairs (21, 23 and, respectively, 22, 24) are arranged diametrically opposite one another on the outer circumference of the junction piece (11),
**in that** each heating conductor pair (21, 23 and, respectively, 22, 24) is bent downward in a compressed manner and by way of the crimp point (20 and, respectively, 30) is routed first from above beneath a lateral bridge web (31 and, respectively, 32) of the housing (11) downward in the direction of the housing base (33), from where it is deflected through 90° and placed around the base (33) of the junction piece (11) in close contact with the housing,
**in that** the end region of the respective heating conductor pair (21, 23 and, respectively, 22, 24) is routed upward again on the respectively opposite side and by way of the crimp point (20 and, respectively, 30) is first passed from below through the bridge web (31 and, respectively, 32), which forms a kind of locking bar, of the housing (11) and is therefore positioned in this position.

2. Connection arrangement according to Claim 1, **characterized in that** the two bridge webs (31 and, respectively, 32) are arranged opposite one another on the outside of the housing (11) and each bridge an axial duct (34 and, respectively, 35) or groove, which axial ducts or grooves are made in the surface of the cylindrical housing of the junction piece (11).

3. Connection arrangement according to Claim 2, **characterized in that** the heating conductor pairs (21, 23 and, respectively, 22, 24) are placed and routed in the ducts (34 and, respectively, 35), one arriving from above, and one arriving from below the housing base (33).

4. Connection arrangement according to one of Claims 1 to 3, **characterized in that** the junction piece (11) which is assembled with the heating conductor pairs is encapsulated with a plastics material.

5. Connection arrangement according to Claim 4, **characterized in that** the potting layer (37) is composed of polyurethane or polyamide.

## Revendications

1. Agencement de raccordement pouvant être chauffé pour tuyaux conduisant des fluides pouvant être chauffés électriquement, l'agencement de raccordement présentant une pièce de bifurcation qui présente deux tubulures de raccordement pour chaque extrémité de tuyau, et qui présente un raccord supplémentaire communiquant avec l'intérieur de la conduite,
chaque tuyau étant pourvu de deux conducteurs électriques chauffants encastrés dans le tuyau respectif au moins sur une région partielle de la longueur du tuyau, dont les extrémités sont guidées hors du tuyau en vue de leur connexion à un composant électrique,
**caractérisé en ce que**
les extrémités isolées des conducteurs chauffants (21, 22) d'une extrémité de tuyau (14) sont connectées aux extrémités isolées des conducteurs chauffants (23, 24) de l'autre extrémité de tuyau (15) au moyen d'une douille de sertissage respective (20, respectivement 30) pour former deux paires de conducteurs chauffants (21, 23, respectivement 22, 24), **en ce que** les points de sertissage (20, respectivement 30) des deux paires de conducteurs chauffants (21, 23, respectivement 22, 24) sont disposés à la périphérie extérieure de la pièce de bifurcation (11) de manière diamétralement opposée,
**en ce que** chaque paire de conducteurs chauffants (21, 23, respectivement 22, 24) est courbée vers le bas de manière comprimée et est guidée avec le point de sertissage (20, respectivement 30) en premier depuis le haut sous une nervure latérale formant pont (31, respectivement 32) du boîtier (11) à travers celui-ci vers le bas en direction du fond du boîtier (33), d'où elle est déviée de 90° et est amenée en contact étroit avec le boîtier aux environs du fond (33) de la pièce de bifurcation (11),
**en ce que** la région d'extrémité de la paire respective de conducteurs chauffants (21, 23, respectivement 22, 24) est à nouveau guidée vers le haut du côté respectivement opposé et est enfichée avec le point de sertissage respectif (20, respectivement 30) en premier depuis le bas à travers la nervure formant pont (31, respectivement 32) du boîtier (11) en formant une espèce de verrou et est ainsi positionnée dans cette position.

2. Agencement de raccordement selon la revendication 1, **caractérisé en ce que** les deux nervures formant pont (31, respectivement 32) sont disposées en regard l'une de l'autre à l'extérieur au niveau du boîtier (11) et surmontent chacune un canal (34, respectivement 35) ou une rainure axial(e), qui sont pratiqué(e)s dans la surface du boîtier cylindrique de la pièce de bifurcation (11).

3. Agencement de raccordement selon la revendication 2, **caractérisé en ce que** dans les canaux (34, respectivement 35), les paires de conducteurs chauffants (21, 23, respectivement 22, 24) sont insérées et guidées une fois vers le haut et une fois vers le bas en venant du bas depuis le fond du boîtier (33).

4. Agencement de raccordement selon l'une quelconque des revendications 1 à 3, **caractérisé en ce que** la pièce de bifurcation (11) confectionnée avec les paires de conducteurs chauffants est enrobée par coulage d'un matériau en plastique.

5. Agencement de raccordement selon la revendication 4, **caractérisé en ce que** la couche d'enrobage (37) se compose de polyuréthane ou de polyamide.
